# EUROPÄISCHE PATENTSCHRIFT

(11) **EP 0 836 762 B1**
(45) Veröffentlichungstag und Bekanntmachung des Hinweises auf die Patenterteilung: **03.03.1999**
(21) Anmeldenummer: 96917363.2
(22) Anmeldetag: 24.06.1996
(51) Int. Cl.: H02M 3/335

(54) **SPANNUNGSUMSETZER ZUM ERZEUGEN EINER GEREGELTEN AUSGANGSSPANNUNG AUS EINER EINGANGSSPANNUNG**
VOLTAGE CONVERTER FOR GENERATING A REGULATED OUTPUT VOLTAGE FROM AN INPUT VOLTAGE
CONVERTISSEUR DE TENSION SERVANT A GENERER UNE TENSION DE SORTIE REGULEE A PARTIR D'UNE TENSION D'ENTREE

(30) Priorität: 04.07.1995 DE 19524408
(43) Veröffentlichungstag der Anmeldung: 22.04.1998
(73) Patentinhaber: SIEMENS AKTIENGESELLSCHAFT, 80333 München (DE)
(72) Erfinder: PRELLER, Peter, D-81243 München (DE)
(86) Internationale Anmeldenummer: DE9601112
(87) Internationale Veröffentlichungsnummer: WO9702648

(56) Entgegenhaltungen:
- EP-A- 0 380 033
- PATENT ABSTRACTS OF JAPAN vol. 014, no. 451 (E-0984), 27.September 1990 & JP,A,02 179271 (CANON INC), 12.Juli 1990,
- PATENT ABSTRACTS OF JAPAN vol. 016, no. 392 (E-1251), 20.August 1992 & JP,A,04 127872 (CANON INC), 28.April 1992,

## Beschreibung

Die Erfindung betrifft einen Spannungsumsetzer bzw. Sperrwandler nach dem Oberbegriff des Patentanspruchs 1.

Spannungsumsetzer sind im Stand der Technik gut bekannt und in ihren verschiedenen Ausführungen als Abwärtswandler, Aufwärtswandler, Sperrwandler etc. in Tietze, Schenk: "Halbleiterschaltungstechnik", 9. Auflage, 1991, Seiten 561 bis 576 beschrieben. Bei derartigen Spannungsumsetzern ist ein Schaltelement mit einem induktiven Element, z. B. einer Spule oder der Primärwicklung eines Transformators, verbunden, um eine Eingangsspannung, die eine gleichgerichtete Wechselspannung sein kann, taktweise an das induktive Element anzulegen. Das Schaltelement wird in Abhängigkeit von einer Steuerungseinrichtung derart pulsbreitenmoduliert taktgesteuert, daß eine Ausgangsspannung einer gewünschten Charakteristik vorliegt. Üblicherweise soll die geregelte Ausgangsspannung eine lastunabhängig vorliegende möglichst konstante Spannung sein.

Die zur Ansteuerung des Schaltelements notwendige Regelschaltung ist überlicherweise als integrierte Schaltung ausgeführt mit äußeren Beschaltungselementen zur Signalerzeugung und - aufbereitung. Der integrierte Steuerungsbaustein TDA 4605 von Siemens ist als Regelungs-IC für Sperrwandler-Schaltnetzteile geeignet. Die Signalverarbeitung im TDA 4605 wird mit analoger Schaltungstechnik ausgeführt. Diese Schaltungstechnik hat den Vorteil, daß eine relativ geringe Anzahl von Transistoren erforderlich ist, weist aber den Nachteil einer schwierigen Dimensionierung und hohen Störempfindlichkeit gegenüber Betriebsschwankungen und dem Einfluß parasitärer Elemente auf.

In der Literaturstelle Patent Abstracts of Japan, 1991, Band 15, Nr. 236 (E-1078), JP 3-70464, ist ein Schaltregler mit digital arbeitender Regelung beschrieben. Der Regelkreis enthält einen von einem Oszillator angesteuerten Zähler, dessen Zählerstand mit einem Vergleichswert verglichen wird. In Abhängigkeit vom Vergleichsergebnis wird ein im Schaltregler vorgesehenes Schaltelement gesteuert. Der Vergleichswert wird von einem Vorwärts-/Rückwärtszähler bereitgestellt, dessen Vorwärts-/Rückwärtszähleingang von einem Vergleicher angesteuert wird, durch den die zu regelnde Ausgangsspannung mit einem Referenzwert verglichen wird.

In Patent Abstracts of Japan, 1990, Band 14, Nr. 95 (E-892), JP 1-298958 ist ein freischwingendes Schaltnetzteil mit digtal arbeitender Regelung beschrieben, bei dem ein von einem Oszillator taktgesteuerter Arbeitszähler durch ein von einer Transformatorwickiung abgeleitetes Rückkopplungssignal rückgesetzt wird. Dadurch wird die Ausschaltzeit des Schalttransistors auf die Resonanzfrequenz des Transformators angepaßt.

In Patent Abstracts of Japan, 1992, Band 16, Nr. 392 (E-1251), JP 4-127872 und in Patent Abstracts of Japan, 1990, Sand 14, Nr. 451 (E-0984), JP 2-179271 sind jeweils Schaltnetzteile mit digital arbeitender Regelung gezeigt, bei denen die Schaltphasen eines Schalttransistors in Abhängigkeit von einem Vorwärts-/Rückwärtszähler festgelegt werden, der in Abhängigkeit von einem Vergleich der zu regelnden Ausgangsspannung mit einer Sollspannung gesteuert wird.

In Patent Abstracts of Japan, 1992, Band 16, Nr. 316 (E-1231), JP 4-87556 ist ein Schaltnetzteil beschrieben, dessen Regelkreis eine CPU enthält.

In der EP-A2-0 380 033 ist ein Sperrwandler-Schaltnetzteil gezeigt, bei dem im Standby-Betrieb die Schaltfrequenz erringert ist. Hierzu ist eine aus einer Reihenschaltung eines Widerstands und eines Kondensators gebildete Kopplung zwischen eine Klemme für ein Nulldurchgangsdetektorsignal und eine Klemme für eine von der zu regelnden Ausgangsspannung abhängige Regelspannung geschaltet. Zur Verringerung der Ausgangsspannung im Standby-Betrieb wird der Betriebsfall mit verringerter Schaltfrequenz erfaßt und dann eine in der Regelegung verwendete Referenzspannung auf einen anderen Wert umgeschaltet.

Die bisher bekannten digital arbeitenden Netzteile werden für ausgangsseitig niedrige Last (Standby) in unveränderter Funktion betrieben und sehen keine besonderen, diesen Betriebs zustand berücksichtigenden Schaltungsmittel vor. Wünschenswert ist im Standby-Betrieb insbesondere ein geringe Verlustleistung des Netzteils.

Die Aufgabe der Erfindung besteht darin, einen Spannungsumsetzer der eingangs genannten Art anzugeben, der im Niedriglastbetrieb eine geringe Verlustleistung aufweist.

Erfindungsgemäß wird diese Aufgabe durch die kennzeichnenden Merkmale des Patentanspruchs 1 gelöst.

Beim erfindungsgemäßen Sperrswandler sind die Steuerungsmittel zur Ansteuerung des Schaltelements vollständig in digitaler Schaltungstechnik realisiert. Der digitale Steuerungsschaltkreis hat folglich ein genaues, vorhersagbares Verhalten. Seine Funktion ist weitgehend störunempfindlich. Störungseinflüsse, die bei analoger Schaltungsrealisierung zu empfindlichen Betriebsstörungen führen würden, können bei der digitalen Realisierung in weiten Bereichen schwanken. Dies gilt beispielsweise für die Schwankungen der Versorgungsspannung, parasitäre Schaltungselemente, Temperatureinfluß etc. Als wesentliches Element enthält der digitale Regelungsschaltkreis eine Zähleinrichtung, mit der zum Regelvorgang erforderliche Zeitabschnitte bestimmt werden, indem ein Vergleich mit einem an die Ausgangsspannung gekoppelten Vergleichsdigitalwert durchgeführt wird.

In einem Sperrwandler-Schaltnetzteil wird das Schaltelement in Abhängigkeit von einem charakteristischen Signalanteil eingeschaltet und ausgeschaltet, wenn die Zähleinrichtung den von der Ausgangsspannung abgeleiteten Vergleichswert erreicht. Die Ausgangsspannung wird dadurch konstant gehalten. Als charakteristischer Signalanteil wird ein Signalanteil gewählt werden, der die Entmagnetisierung des Transformators angibt. Dies ist beispielsweise der Nulldurchgang einer Transformatorspannung, der angibt, daß die im Transformator des Sperrwandler-Schaltnetzteil enthaltene magnetische Energie vollständig von der Primärseite auf die Sekundärseite abgegeben worden ist.

Zur Bereitstellung des digitalen Vergleichswerts kann ein Zähler verwendet werden, der bei jeder Schaltperiode in Abhängigkeit von der Ausgangsspannung um ein vorbestimmtes Inkrement gezählt wird. Die Zählrizhtung wird dabei von der Lage der Ausgangsspannung zu einem Sollwert festgelegt. Durch diese Maßnahme wird eine Verzögerung in den Regelkreislauf eingefügt, so daß Schwingungen der Regelung gedämpft werden.

Vorzugsweise ist das Zählinkrement von der Ausgangsspannung abhängig veränderbar.

Die Regelschaltung weist ausgangsseitig zweckmäßigerweise ein Speicherelement auf, das mit dem Nulldurchgang der Transformatorspannung gesetzt wird, so daß das Schaltelement eingeschaltet wird, und rückgesetzt wird, wenn von der Zähleinrichtung der Vergleichsdigitalwert erreicht wird.

Durch einen weiteren Vergleichsdigitalwert, der wiederum von einem Aufwärts-/Abwärtszähler bereitgestellt werden kann, können weitere Zeitspannen innerhalb einer Schaltperiode des Wandlers bestimmt werden, um bestimmten Betriebsbedingungen des Spannungswandlers Rechnung zu tragen. Vorteilhafterweise Während eines Niedriglastbetriebs (Standby) werden einige Nulldurchgänge der Transformatorspannung ignoriert, die ansonsten zum Einschalten des Schaltelements führen würden. Dadurch wird die Schaltfrequenz des Spannungswandlers verringert. Da die Verlustleistung des Spannungswandlers wesentlich von Schaltverlusten, hauptsächlich im Schaltelement verursachten abhängt, wird der Wirkungsgrad bei Niedriglastbetrieb und die verbrauchte Verlustleistung erniedrigt.

Nachfolgend wird die Erfindung anhand des in der Zeichnung dargestellten Ausführungsbeispiels näher erläutert. Es zeigen:
- Figur 1: ein Prinzipschaltbild eines Sperrwandler-Schaltnetzteils mit einer digitalen Regelungsschaltung,
- Figur 2: das Schaltungsprinzip der digitalen Regelungsschaltung,
- Figur 3: eine Ausführungsform des Prinzips der Figur 2 gemäß des Erfindung und
- Figur 4 (a) und (b): Signalverlaufsdiagramme einer Schaltperiode des Schaltnetzteils im Normal- und Niedriglastbetrieb.

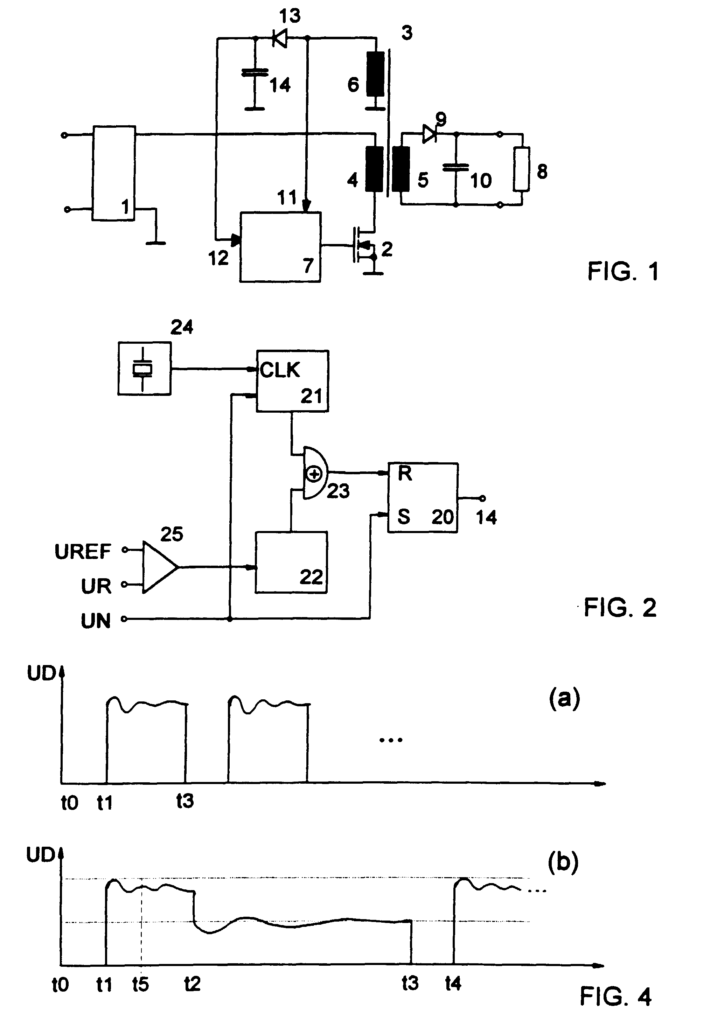

Das Sperrwandler-Schaltnetzteil gemäß Figur 1 weist eingangsseitig einen Gleichrichter 1 auf, vorzugsweise einen Brückengleichrichter, dem eine Eingangswechselspannung zuführbar ist. Am Ausgang des Gleichrichters 1 liegt die gleichgerichtete Wechselspannung vor. Am Ausgang des Schaltnetzteils wird eine Last 8 von einer geregelten zu erzeugenden Konstantspannung versorgt. In Reihe zu der Primärwicklung 4 eines Transformators 3 ist ein Schalttransistor 2 geschaltet. Mittels der Ein- und Ausschaltphasen des Schalttransistors 2 wird die vom Gleichrichter 1 abgegebene gleichgerichtete Wechselspannung taktweise an die Primärwicklung 4 des Transformators 3 angelegt. Eine digital realisierte Steuerungseinrichtung 7 sorgt für das pulsbreitenmodulierte Ansteuern des Schalttransistors 2 derart, daß an der Last 8 die konstante geregelte Ausgangsspannung möglichst unabhängig von Lastschwankungen der Last 8 anliegt. Hierzu wird die an einer weiteren Wicklung 6 des Transformators 3 anliegende Spannung der Regelschaltung 7 an einem Anschluß 11 und über eine Gleichrichterdiode 13 und eine Glättungskondensator 14 zur Gleichrichtung an einem Anschluß 12 zugeführt.

Die in Figur 1 dargestellte Schaltung arbeitet folgendermaßen. Dabei wird auf das in Figur 4 (a) dargestellte Signalverlaufsdiagramm einer Schaltperiode des Schaltnetzteils für den Normalbetrieb Bezug genommen. Zum Zeitpunkt t0 wird der Schalttransistor eingeschaltet. Sein Drainanschluß wird auf Massepotential gezogen, so daß an der Primärwicklung 4 die vom Gleichrichter 1 abgegebene Spannung anliegt. Der durch die Primärwicklung 4 fließende Strom steigt bekanntlich linear mit der Zeit an. Zum Zeitpunkt t1 wird der Schalttransistor ausgeschaltet. Die Einschaltphase t0-t1 des Schalttransistors wird in Abhängigkeit von dem am Anschluß 12 der Steuerungseinrichtung 7 anliegenden Signal lastabhängig eingestellt. Zwischen den Zeitpunkten t1 und t3 ist der Schalttransistor ausgeschaltet, so daß die im Transformator 3 gespeicherte magnetische Energie über die Sekundärwicklung 5 der Gleichrichtung mittels Diode 9 und Kondensator 10 an die Last 8 abgegeben werden kann. Wenn die im Transformator gespeicherte Energie vollständig an die Sekundärwicklung abgegeben ist, wird die an der Regelwicklung 6 anliegende Spannung Null. Dies wird dem Steuerungsschaltkreis 7 am Anschluß 11 mitgeteilt, so daß der Schalttransistor 2 zum Zeitpunkt t3 wieder eingeschaltet wird. Die Einschaltdauer t0-t1 wird von der Steuerungseinrichtung 7 derart eingestellt, daß an der Last 8 möglichst eine konstante Spannung unabhängig von Lastschwankungen anliegt.

Zur Regelung der Ein- und Ausschaltphasen des Schalttransistors 2 weist die Steuerungseinrichtung 7 den in Figur 2 dargestellten prinzipiellen Aufbau auf. Ein Speicherelement 20 wird vom Nulldurchgangssignal UN (Setzeingang S des Speicherelements 20) gesetzt, so daß der an seinem Ausgangsanschluß 14 angeschlossene Schalttransistor 2 eingeschaltet wird. Das Nulldurchgangssignal UN wird aus dem am Anschluß 11 anliegenden Signal durch bekannte Schaltungsmaßnahmen zur Nulldurchgangsdetektion abgeleitet. Darüber hinaus wird ein Zähler 21 durch das Nulldurchgangssignal UN rückgesetzt. Der Zähler 21 wird von einem Taktgenerator 24 am Anschluß CLK taktgesteuert, so daß er fortlaufend hochzählt. In der Einrichtung 22 ist ein von der zu regelnden Ausgangsspannung abgeleiteter Digitalwert gespeichert. In einer Vergleichseinrichtung 23, die Exclusiv-ODER-Gatter enthält, wird der Zählerstand des Zählers 21 mit dem Vergleichswert in der Einrichtung 22 verglichen. Bei positivem Vergleich wird das Speicherelement 20 am Rücksetzeingang R zurückgesetzt, so daß der Schalttransistor 2 ausgeschaltet wird. Der Digitalwert der Einrichtung 22 kann beispielsweise durch direkte Analog-Digital-Wandlung einer zur Ausgangsspannung proportionalen Spannung erhalten werden. Vorzugsweise ist in der Figur 2 für die Einrichtung 22 ein Vorwärts-/Rückwärtszähler vorgesehen, dessen Vorwärts-/Rückwärtszähleingang von einem Komparator 25 angesteuert wird. Durch den Komparator 25 wird die am Anschluß 12 eingespeiste Regelspannung UR mit einem Referenzwert UREF verglichen. Der Referenzwert UREF korrespondiert mit der zu regelnden Ausgangsspannung des Schaltnetzteils an der Last 8.

Wenn die Regelspannung UR größer ist als die Referenzspannung UREF, wird der Zähler 22 mit einer vorbestimmten Schrittweite rückwärts gezählt. Hierbei wird während einer Schaltperiode des Schaltnetzteils, die eine Ausschaltphase und eine Einschaltphase des Schalttransistors umfaßt, im Zähler 22 nur ein Zähltakt ausgeführt. Wenn die Referenzspannung UR kleiner ist als die Referenzspannung UREF, wird der Zähler 22 um eine Schrittweite vorwärts gezählt. Auf diese Weise wird erreicht, daß die zu regelnde Ausgangsspannung des Schaltnetzteils um den Sollwert schwankt. Dieses Regelungsprinzip entspricht einem Proportionalregler. Die Schrittweite zum Vorwärts- und Rückwärtszählen wird relativ klein gewählt, um eine ausreichende Zeitkonstante in den Regelkreislauf einzufügen, so daß die Schwingneigung der Regelung gedämpft wird. Für ein praxisgerechtes Regelverhalten hat sich eine Frequenz des Oszillators 24 von 8 MHz als geeignet erwiesen. Die Einschaltdauer t₀ - t₁ des Schaltelements 2 wird somit mittels des Vergleichszählers 22 in genügend kleinen Zeitschritten verändert, so daß Trafogeräusche vermieden werden.

Es ist vorteilhaft, die Schrittweite in Abhängigkeit vom Betriebszustand unterschiedlich zu wählen. Bei einem Zustandswechsel am Ausgang des Komparators 25 ist die Schrittweite größer als dann, wenn kein Zustandswechsel unmittelbar vorausgegangen ist. Dadurch wird erreicht, daß dann, wenn die Ausgangsspannung den Sollwert unter- oder überschreitet, eine schnelle Nachregelung in Form einer relativ großen Nachstellung der Einschaltzeit des Schalttransistors ausgeführt wird. Ansonsten ist die Nachstellung gering. In der Praxis hat sich als vorteilhaft erwiesen, unmittelbar nach einem Zustandswechsel des Ausgangssignals des Komparators um +/-4 Schrittweiten den Zähler 22 vor- bzw. rückwärts zu zählen, in der nachfolgenden Schaltperiode um +/-3, dann +/-2 und nachfolgend um +/-1 Schrittweiten. Die Regelcharakteristik des Regelkreises ist hierbei die eines Proportional-Integral-Reglers, so daß die verbleibende Regelabweichung geringer ist.

Diese angegebenen Funktionsblöcke können als solche in einer integrierten Schaltung realisiert werden, was auch für die nachfolgend noch angegebenen Ausführungen gilt. Sie können auch mit einer Mikroprozessor-Architektur realisiert werden, bei der die Funktionen der Blöcke softwaregesteuert ausgeführt werden. Denkbar wäre auch eine Realisierung in Form eines Zustandsschaltwerks (Finite-States-Machine).

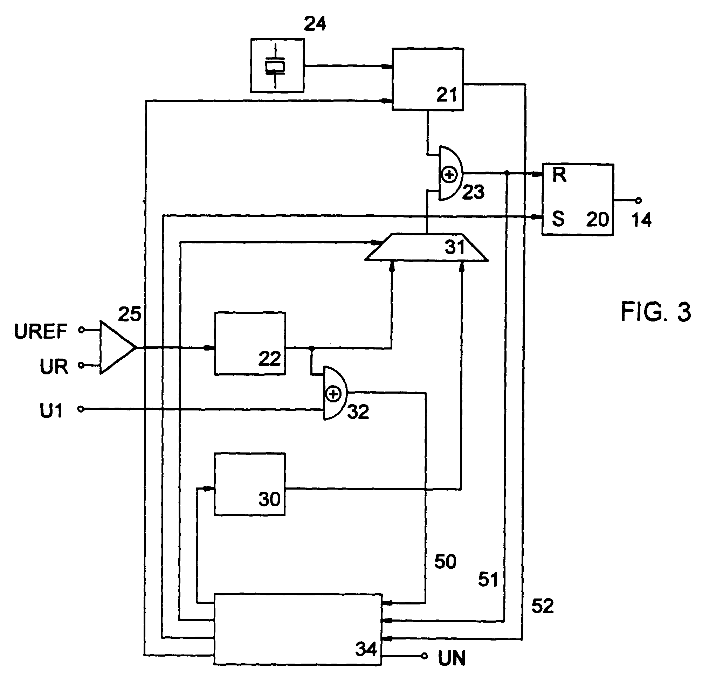

In der Figur 3 ist eine Ausführungsform des in Figur 2 gezeigten Prinzips der digitalen Regelschaltung 7 gezeigt. Entsprechende Elemente sind mit gleichen Bezugszeichen versehen. Im Unterschied zur Realisierung gemäß Figur 2 enthält die Schaltung nach Figur 3 einen weiteren Vergleichszähler 30, der über einen Multiplexer 31 alternativ zum Ausgang des Vergleichszählers 22 mit der Vergleichseinrichtung 23 verbindbar ist. Darüber hinaus ist eine weitere Vergleichseinrichtung 32 vorgesehen, durch die der Zählerstand des Zählers 22 mit je einem Vergleichswert U1 vergleichbar ist. Der Vergleichswert U1 kann digital eingespeist werden, vorzugsweise aber analog, beispielsweise über einen Spannungsteiler, dessen Ausgangssignal analog-digital-gewandelt wird. Letzteres ist zweckmäßig, da der Steuerungsschaltkreis 7 auf der Primärseite des Schaltnetzteils liegt und dort kaum andere digitale Signalverarbeitungseinrichtungen vorhanden sind. Außerdem ist eine Steuerungseinrichtung 34 vorgesehen, der die Ausgänge des Vergleichers 32, des Arbeitszählers 21 sowie das Nulldurchgangssignal UN zuführbar sind und die daraus Steuersignale zum Setzen des Speicherelements 20, Rücksetzen des Arbeitszählers 21, Vorwärts-/Rückwärtszählen des Vergleichszählers 30 und Umschalten des Multiplexers 31 erzeugt.

Die Funktion der in Figur 3 gezeigten Schaltung wird nun unter Bezugnahme auf den in Figur 4 (b) gezeigten Signalverlauf der Drainspannung UD des Schalttransistors 2 während einer Schaltperiode beschrieben. Während des Niedriglastbetriebs (Standby) ist es vorteilhaft, zur Reduzierung der Verlustleistung, die Schaltfrequenz des Schaltnetzteils zu verringern. Hierzu wird für eine Reihe von Nulldurchgängen der Transformatorspannung das Einschalten des Schalttransistors verhindert. Dies ist in der Figur 4 (b) zwischen den Zeitpunkten t2-t3 dargestellt, wobei die Drainspannung UD eine freie Schwingung ausführt, die um die am positiven Ausgangsanschluß des Gleichrichters 1 anliegende Spannung schwingt. Die entsprechende Schwingung liegt an der Regelwicklung 6 und am Eingang 11 in bezug auf Masse vor, so daß dort Nullpunktdurchgänge detektierbar sind.

Zur Erzeugung der Ausblendzeit t2-t3 wird mittels des Vergleichers 32 der Niedriglastbetrieb festgestellt. Hierzu wird der Zählerstand des Vergleichszählers 22 mit dem Vergleichswert U1 verglichen. Wenn der Zählerstand des Zählers 22 die Vergleichsschwelle U1 unterschreitet, bedeutet dies, daß die sekundäre Ausgangsspannung relativ hoch ist und weit über der ausgangsseitigen Sollspannung liegt (welche der Referenzspannung UREF entspricht). Da die Ausgangslast 8 niedrig ist, wird die an die Sekundärseite übertragene Energie nicht vollständig verbraucht. Die Feststellung des Niedriglastbetriebs wird der Steuerungseinrichtung 34 am Anschluß 50 mitgeteilt. Daraufhin (Zeitpunkt t2) wird der Vergleichszähler 30, der bislang auf Null zurückgesetzt war, um einen Zählschritt hochgezählt. Außerdem wird der Arbeitszähler 21 zurückgesetzt und der Multiplexer 31 schaltet auf den Vergleichszähler 30 um, um den Zeitraum t2-t3 festlegen zu können. Wenn der Arbeitszähler zum Zeitpunkt t3 den Vergleichswert des Vergleichszählers 30 erreicht, wird dies der Steuerungseinrichtung 34 am Anschluß 51 mitgeteilt, so daß wiederum ein Einschaltvorgang des Schalttransistors stattfinden kann. Hierzu wird der Multiplexer 31 auf den Vergleichs zähler 22 umgeschaltet, der Arbeitszähler 21 wird wiederum wie beim Zeitpunkt t0 rückgesetzt. Da aufgrund der Ausblendzeit t2-t3 die Ausgangsspannung abgesunken ist, wird der Vergleichszähler 22 wieder um eine Schrittweite hochgezählt, so daß die Einschaltzeit t3-t4 geringfügig länger ist als die vorherige Einschaltzeit t0-t1. Die Einschaltzeit des Schalttransistors 2 wird also im Niedriglastbetrieb verlängert, während die Ausschaltzeit ebenfalls verlängert wird. Insgesamt ergibt sich eine Reduzierung der Schaltfrequenz und somit eine Verringerung der frequenzabhängigen Verlustleistung.

In nachfolgenden Schaltperioden während des Niedriglastbetriebs wird die Ausblendzeit t2-t3 erhöht, außerdem die entsprechende Einschaltzeit erhöht, bis der Ausgang des Zählers 22 den Vergleichswert U1 überschreitet, so daß der Zählerstand des zweiten Vergleichszählers 30 um die für ihn vorgegebene Schrittweite wieder zurückgezählt wird, so daß sich die Ausblendzeit t2-t3 wieder verringert. Im eingeschwungengen Zustand ergibt sich dann ein Gleichgewicht, bei dem sich die Einschaltzeit des Schalttransistors und die Ausblendzeit für die Nulldurchgänge derart einstellt, daß die Ausgangsspannung an der Last 8 konstant ist.

Die Schwelle U1 für den ersten Vergleichszähler 22, mit der der zweite Vergleichszähler 30 zum Erzeugen der Ausblendzeit t2-t3 zuschaltbar ist, weist vorzugsweise einen ersten, höher liegenden Schwellwert auf, bei dessen Überschreitung der zweite Vergleichszähler 30 hochgezählt wird und einen zweiten, niedriger liegenden Schwellwert, bei dem der zweite Vergleichszähler 30 zurückgezählt wird. Dadurch wird eine Hysteresewirkung erreicht, die Regelung der Ausblendzeit t2-t3 im Niedriglastbetrieb wird insgesamt träger uns stabiler, was die Schwingneigung verringert. Dadurch können Schwingungsüberlagerungen, die hörbar wären, vermieden werden.

Das in Figur 3 dargestellte digitale Schaltungsprinzip ermöglicht in einfacher Weise einige Weiterbildungen der Erfindung. Beispielsweise kann ein weiterer Vergleicher (nicht dargestellt) vorgesehen werden, durch den der Zählerstand des zweiten Vergleichszählers 30 auf das Überschreiten eines weiteren Vergleichswerts hin überwacht werden kann, was der Steuerungseinrichtung 34 an einem Anschluß mitgeteilt wird. Es wird dadurch erkannt, daß die Ausblendzeit t2-t3 relativ groß ist. In Abhängigkeit davon kann ein Burst-Betrieb aktiviert werden. Dies bedeutet, daß während einer gewissen Zeitspanne das Schaltnetzteil vollständig blockiert ist und während einer weiteren Zeitspanne im Normalbetrieb oder Niedriglastbetrieb läuft. Blockierungs- und Betriebszeit können an die Phase der eingangsseitigen Wechselspannung gekoppelt sein. Zum Auszählen der Blockierungszeit ist ein weiterer Zähler vorgesehen. Vorzugsweise wird dieser einem Bit im Ausgang des Arbeitszählers 21 nachgeschaltet, um diesen als Vorteiler zu benutzen.

Ein Überspannungs- und Überlastschutz kann derart realisiert werden, daß ein weiterer (nicht dargestellter) Zähler vorgesehen ist, der bei jedem vom Vergleicher 25 abgegebenen Aufwärtszählimpuls bzw. Abwärtszählimpuls für den ersten Vergleichszähler 22 hochgezählt wird und bei einem Zustandswechsel des Vergleichers 25 rückgesetzt wird. Dieser weitere Zähler sorgt dafür, daß Unterlast bzw. Überlast, z. B. zu hohe ausgangsseitige Spannung bei Unterlast oder zu hoher Ausgangsstrom bei Kurzschluß, erkannt werden.

Unmittelbar nach dem Ausschaltzeitpunkt tl des Schalttransistors 2 können bekanntlich aufgrund von Überschwingern unerwünschte Nulldurchgänge auftreten. Um zu verhindern, daß ein solcher Nulldurchgang zum Einschalten des Schalttransistors 2 führt, wird eine mit dem Ausschaltzeitpunkt t1 beginnende Zeitspanne t1-t5 bestimmt, während der das Erkennen von Nulldurchgängen blockiert wird. Die entsprechende Blockierungszeit t1-t5 für die Nulldurchgangserkennung wird durch Auscodierung eines festen Zählerstandes des Arbeitszählers 21 ausgeführt. Das Erreichen des festen Zählerstandes wird am Anschluß 52 der Steuerungseinrichtung 34 mitgeteilt. Hierbei muß zum Zeitpunkt t1 der Arbeitszähler rückgesetzt werden.

Nach dem Zeitpunt t3 kann die Schwingung im Schaltnetzteiltransformator so weit abgeklungen sein, daß keine Nulldurchgänge mehr feststellbar sind und folglich der Schalttransistor 2 nicht mehr einschaltbar ist. Um trotdem für ein sicheres Einschalten des Schalttransistors 2 zu sorgen, wird der Schalttransistor nach Ablauf einer an den Zeitpunkt t3 angefügten Zeitspanne ohne weitere Bedingung eingeschaltet, wenn bislang kein Nulldurchgang wegen der bereits abgeklungenen Schwingung erkennbar war. Eine entsprechende Zeitspanne wird an den Zeitpunkt t3 am Ende der Ausblendezeit t2-t3 angefügt. Hierzu wird wiederum der Zählerstand des Arbeitszählers 21 auf das Auftreten eines bestimmten Wertes hin mittels einer entsprechenden Kodierungslogik überwacht und das Ergebnis der Steuerungseinrichtung 34 am Anschluß 52 mitgeteilt. Hierzu muß zum Zeitpunkt t3 die Steuerungseinrichtung 34 den Arbeitszähler 21 rücksetzen.

## Patentansprüche

1. Sperrwandler mit Standby-Betrieb zum Erzeugen einer geregelten Ausgangsspannung aus einer Eingangsspannung, enthaltend einen zwischen einen Eingangskreis und einen Ausgangskreis des Spannungsumsetzers geschaltetes induktives Element (4), das mit einem Schaltelement (2) zum taktweisen Anlegen der Eingangsspannung an das induktive Element (4) verbunden ist, und Mittel (7), durch die das Schaltelement (2) zur Regelung der Ausgangsspannung ansteuerbar ist und die eine digitale Zähleinrichtung (21) enthalten, deren Ausgangssignal mit einem von der Ausgangsspannung abgeleiteten digitalen Vergleichswert verglichen wird, wobei in Abhängigkeit vom Vergleichsergebnis das Schaltelement (2) ausgeschaltet wird,
**dadurch gekennzeichnet,**
daß ein den Entmagnetisierungszustand des induktiven Elements (4) angebendes Signal bereitgestellt wird, daß bei der Feststellung eines Niedriglastbetriebs und der Feststellung des Entmagnetisierungszustands ein weiterer Vergleichswert (30) erzeugt wird und die Zähleinrichtung (21) mit dem weiteren Vergleichswert (30) verglichen wird und daß das Einschalten des Schaltelements (2) zuerst blockiert ist und dann in Abhängigkeit vom Vergleichsergebnis des weiteren Vergleichswerts (30) mit dem Wert der Zähleinrichtung (21) freigegeben ist.

2. Sperrwandler nach Anspruch 1,
**dadurch gekennzeichnet,** daß
das induktive Element (4) ein Transformator (3) ist mit einer Primärwicklung (4), zu der das Schaltelement (2) in Reihe geschaltet ist und einer Sekundärwicklung (5) zum Anschluß einer Last (8) über eine Gleichrichtereinrichtung (9, 10) und daß die Mittel (7) zum Ansteuern des Schaltelements (2) derart ausgeführt sind, daß das Schaltelement (2) eingeschaltet wird, Wenn ein den Entmagnetisierungszusmand des Transformators angebender charakteristischer Signalanteil eines von einer Transformatorwicklung (6) abgeleiteten Signals auftritt, und daß das Schaltelement (2) ausgeschaltet wird, wenn das Ausgangssignal der Zähleinrichtung (21) den Vergleichswert (22) erreicht.

3. Sperrwandler nach Anspruch 1 oder 2,
**dadurch gekennzeichnet,** daß
eine Vergleichszähleinrichtung (22) vorgesehen ist, durch die der Vergleichswert bereitgestellt wird, daß die Vergleichszähleinrichtung (22) in einer durch eine Einschaltphase und eine Ausschaltphase des Schaltelements (2) gebildeten Periode um ein vorbestimmtes Inkrement gezählt wird und daß die Zählrichtung durch einen Vergleicher (25) bestimmt wird, durch den ein an die zu regelnde Ausgangsspannung gekoppeltes Signal (UR) mit einem Referenzsignal (UREF) verglichen wird.

4. Sperrwandler nach Anspruch 3,
**dadurch gekennzeichnet,** daß
das Inkrement des Vergleichszählers (22) für eine auf eine Änderung der Zählrichtung folgende Periode im Betrag größer ist als für mindestens eine nachfolgende Periode.

5. Sperrwandler nach einem der Ansprüche 2 bis 4,
**dadurch gekennzeichnet,** daß
wenn das von der Transformatorwicklung (6) abgeleitete Signal (UN) einen Nulldurchgang aufweist, ein Speicherelement (20) gesetzt wird, um das Schaltelement (2) einzuschalten, und die Zähleinrichtung (21) gestartet wird, daß die Zähleinrichtung von einer Referenztakterzeugungseinrichtung (24) taktgesteuert wird und daß das Speicherelement (20) rückgesetzt wird, wenn der Zählerstand der Zähleinrichtung (21) den Vergleichswert (22) erreicht.

6. Sperrwandler nach einem der Ansprüch 1 bis 5,
**dadurch gekennzeichnet,** daß
der weitere Vergleichswert (30) dann zum Vergleich mit der Zähleinrichtung (21) bereitgestellt wird, wenn der erste Vergleichszähler (22) eine Vergleichsschwelle (U1) unterschreitet.

7. Sperrwandler nach einem der Ansprüche 1 bis 5,
**dadurch gekennzeichnet,** daß
der weitere Vergleichswert von einem weiteren Vergleichszähler (30) bereitgestellt wird, dessen Zählerstand während einer Periode um ein Inkrement in eine erste Zählrichtung dann verändert wird, wenn der Zählerstand des ersten Vergleichswerts (22) einen Schwellwert (U1) unterschreitet, und um ein Inkrement in eine zweite entgegensetzte Zählrichtung verändert wird, wenn der Zählerstand des ersten Vergleichszählers (22) den Schwellwert (U1) überschreitet.

## Claims

1. Flyback converter having a standby mode for generating a regulated output voltage from an input voltage, containing an inductive element (4), which is connected between an input circuit and an output circuit of the voltage converter and is connected to a switching element (2) for cyclic application of the input voltage to the inductive element (4), and means (7), by which the switching element (2) can be driven for the purpose of regulating the output voltage and which contain a digital counting device (21), whose output signal is compared with a digital comparison value derived from the output voltage, the switching element (2) being switched off in dependence on the comparison result,
characterized
in that a signal specifying the demagnetization state of the inductive element (4) is provided, in that, in the course of ascertaining a low-load mode and ascertaining the demagnetization state, a further comparison value (30) is generated and the counting device (21) is compared with the further comparison value (30), and in that the switching on of the switching element (2) is firstly blocked and is then enabled in dependence on the comparison result of the further comparison value (30) with the value of the counting device (21).

2. Flyback converter according to Claim 1,
characterized in that
the inductive element (4) is a transformer (3) with a primary winding (4), with which the switching element (2) is connected in series, and a secondary winding (5) for the connection of a load (8) via a rectifier device (9, 10), and
in that the means (7) for driving the switching element (2) are designed in such a way that the switching element (2) is switched on if a characteristic signal component of a signal derived from a transformer winding (6) occurs, which characteristic signal component specifies the demagnetization state of the transformer,
and in that the switching element (2) is switched off if the output signal of the counting device (21) reaches the comparison value (22).

3. Flyback converter according to Claim 1 or 2,
characterized in that
a comparison counting device (22) is provided which provides the comparison value, in that the comparison counting device (22) is counted by a predetermined increment in a period formed by an on phase and an off phase of the switching element (2), and in that the counting direction is determined by a comparator (25), by which a signal (UR) coupled to the output voltage to be regulated is compared with a reference signal (UREF).

4. Flyback converter according to Claim 3,
characterized in that
the increment of the comparison counter (22) is larger in terms of magnitude for a period which follows a change in the counting direction than for at least one succeeding period.

5. Flyback converter according to one of Claims 2 to 4,
characterized in that
if the signal (UN) derived from the transformer winding (6) has a zero crossing, a storage element (20) is set in order to switch the switching element (2) on, and the counting device (21) is started, in that the counting device is clocked by a reference clock generation device (24), and in that the storage element (20) is reset if the counter reading of the counting device (21) reaches the comparison value (22).

6. Flyback converter according to one of Claims 1 to 5,
characterized in that
the further comparison value (30) is provided for comparison with the counting device (21) when the first comparison counter (22) falls below a comparison threshold (U1).

7. Flyback converter according to one of Claims 1 to 5,
characterized in that
the further comparison value is provided by a further comparison counter (30), whose counter reading is changed during a period by an increment in a first counting direction when the counter reading of the first comparison value (22) falls below a threshold value (U1), and is changed by an increment in a second, opposite counting direction when the counter reading of the first comparison counter (22) exceeds the threshold value (U1).

## Revendications

1. Convertisseur à oscillation bloquée avec fonctionnement de veille pour produire une tension de sortie régulée à partir d'une tension d'entrée, comportant un élément inductif (4), qui est branché entre un circuit d'entrée et un circuit de sortie du convertisseur de tension et qui est relié à un élément de commutation (2) pour appliquer selon une certaine cadence la tension d'entrée à l'élément inductif (4), et des moyens (7), par lesquels l'élément de commutation (2) peut être commandé pour la régulation de la tension de sortie et qui comprennent un dispositif de comptage (21) numérique, dont le signal de sortie est comparé à une valeur de comparaison numérique déduite de la tension de sortie, l'élément de commutation (2) étant bloqué en fonction du résultat de comparaison,
caractérisé par le fait que
un signal indiquant l'état de démagnétisation de l'élément inductif (4) est préparé,
lors de la constatation d'un fonctionnement à charge réduite et lors de la constatation de l'état de démagnétisation, une autre valeur de comparaison (30) est produite et le dispositif de comptage (21) est comparé à l'autre valeur de comparaison (30),
et que la mise en conduction de l'élément de commutation (2) est d'abord bloquée et est ensuite libérée en fonction du résultat de comparaison de l'autre valeur de comparaison (30) à la valeur du dispositif de comptage (21).

2. Convertisseur à oscillation bloquée selon la revendication 1,
caractérisé par le fait que
l'élément inductif (4) est un transformateur (3) ayant un enroulement primaire (4) avec lequel l'élément de commutation (2) est branché en série et ayant un enroulement secondaire (5) pour le raccordement d'une charge (8) par l'intermédiaire d'un dispositif redresseur (9, 10),
et que les moyens (7) destinés à la commande de l'élément de commutation (2) sont conçus de telle sorte que l'élément de commutation (2) est rendu conducteur lorsqu'une composante de signal caractéristique, indiquant l'état de démagnétisation du transformateur, d'un signal dérivé d'un enroulement de transformateur (6) apparaît et que l'élément de commutation (2) est bloqué lorsque le signal de sortie du dispositif de comptage (21) atteint la valeur de comparaison (22).

3. Convertisseur à oscillation bloquée selon la revendication 1 ou 2,
caractérisé par le fait que
il est prévu un dispositif de comptage de comparaison (22) qui fournit la valeur de comparaison,
le dispositif de comptage de comparaison (22) est modifié d'un incrément prédéterminé dans une période formée par une phase de conduction et une phase de blocage de l'élément de commutation (2),
et que le sens de comptage est fixé par un comparateur (25) qui compare un signal (UR) couplé à la tension de sortie à réguler à un signal de référence (UREF).

4. Convertisseur à oscillation bloquée selon la revendication 3,
caractérisé par le fait que
l'incrément du compteur de comparaison (22) pour une période qui suit la modification du sens de comptage est plus grand en valeur absolue que celui pour au moins une période suivante.

5. Convertisseur à oscillation bloquée selon l'une des revendications 2 à 4,
caractérisé par le fait que
lorsque le signal (UN) dérivé de l'enroulement de transformateur (6) présente un passage par zéro, un élément formant mémoire (20) est affecté pour rendre conducteur l'élément de commutation (2) et le dispositif de comptage (21) est lancé,
le dispositif de comptage est commandé en cadence par un dispositif de production de cadence de référence (24),
et que l'élément formant mémoire (20) est remis à l'état initial lorsque l'état du dispositif de comptage (21) atteint la valeur de comparaison (22).

6. Convertisseur à oscillation bloquée selon l'une des revendications 1 à 5,
caractérisé par le fait que
l'autre valeur de comparaison (30) est fournie pour la comparaison avec le dispositif de comptage (21) lorsque le premier compteur de comparaison (22) passe en dessous d'un seuil de comparaison (U1).

7. Convertisseur à oscillation bloquée selon l'une des revendications 1 à 5,
caractérisé par le fait que
l'autre valeur de comparaison est fournie par un autre compteur de comparaison (30), dont l'état de comptage pendant une période est modifié d'un incrément dans un premier sens de comptage lorsque l'état de comptage de la première valeur de comparaison (22) passe en dessous d'une valeur de seuil (U1), et est modifié d'un incrément dans un deuxième sens de comptage opposé lorsque l'état de comptage du premier compteur de comparaison (22) passe en dessus de la valeur de seuil (U1).
